# EUROPÄISCHE PATENTSCHRIFT

(11) **EP 2 585 799 B1**
(45) Veröffentlichungstag und Bekanntmachung des Hinweises auf die Patenterteilung: **26.09.2018**
(21) Anmeldenummer: 11736021.4
(22) Anmeldetag: 21.06.2011
(51) Int. Cl.: G01D 5/244

(54) **WINKELSENSOR**
ANGLE SENSOR
CAPTEUR D'ANGLE

(30) Priorität: 23.06.2010 DE 102010024782
(43) Veröffentlichungstag der Anmeldung: 01.05.2013
(73) Patentinhaber: Leopold Kostal GmbH & Co. KG, 58513 Lüdenscheid (DE)
(72) Erfinder: MOLDENHAUER, Knut, 58097 Hagen (DE)
(74) Vertreter: Kerkmann, Detlef
(86) Internationale Anmeldenummer: PCT/EP2011/060366
(87) Internationale Veröffentlichungsnummer: WO 2011/161113

(56) Entgegenhaltungen:
- EP-A2- 1 777 484
- DE-A1- 19 900 330
- DE-A1- 19 962 241
- DE-C1- 4 005 181

## Beschreibung

Die Erfindung betrifft einen Winkelsensor zur Erfassung der Drehstellung einer drehbaren Welle mit einem drehmomentübertragend mit der Welle verbundenen Antriebszahnrad und zumindest einem durch dieses angetriebenen Messzahnrad, wobei das Antriebszahnrad und das zumindest eine Messzahnrad in einem Sensorgehäuse gelagert sind, und wobei aus der Winkelstellung des/der Messzahnrades/-räder die Winkelstellung der Welle ermittelbar ist.

Aus der DE 199 00 330 A1 ist ein Winkelsensor gemäß dem Oberbegriff des Patentanspruchs 1 bekannt geworden. Sowohl das mit der drehbaren Welle, deren Winkelstellung erfasst werden soll, drehmomentübertragend verbundene Antriebszahnrad als auch das Messzahnrad aus dessen Winkelstellung die Winkelstellung der Welle ermittelt wird, sind dabei auf zueinander parallelen Achsen im Sensorgehäuse gelagert.

Die Messgenauigkeit eines solchen Winkelsensors hängt unter anderem von der Präzision des Zusammenspiels der Verzahnungen der beiden Zahnräder ab. Form- und Lagetoleranzen der beteiligten Bauteile bedingen ein gewisses Spiel zwischen den Zahnrädern, das sich insbesondere bei einer Drehrichtungsumkehr auswirkt, indem es zu einem Hysteresefehler führt.

In der EP 1 132 716 A1 ist ein Winkelsensor zur Erfassung der Drehstellung einer Welle gezeigt, bei dem dieser durch Spiel zwischen den Zahnrädern verursachte Hysteresefehler vermieden werden kann. Durch ein mit der Welle drehmomentübertragend verbundenes Antriebszahnrad werden bei diesem Winkelsensor ein oder mehrere Messzahnräder angetrieben, die jeweils mit Drehstellungssensoren versehen sind, durch die ihre jeweilige Winkelstellung erfassbar ist. Als Beispiele für solche Drehstellungssensoren sind Hall-Sensoren und Potentiometer genannt. Die Messzahnräder sind in den dort gezeigten Ausführungen dieses Winkelsensors jeweils über unterschiedlich ausgestaltete, federnde Lagerelemente spielfrei an das starr und fest mit der Welle verbundene Antriebszahnrad gekoppelt. Durch diese Art der Ankopplung ist es möglich, statische und/oder dynamische Abweichungen der Drehachse der Welle von der idealen Lage dieser Drehachse zu kompensieren. Um dies zu erreichen, muss jedoch in Kauf genommen werden, dass die Drehachsen der Messzahnräder statisch und/oder dynamisch von deren idealer Lage abweichen, was zu nicht unerheblichen Messfehlern führen kann, wenn beispielsweise ein in einem Messzahnrad aufgenommener Permanentmagnet sich im Bezug auf einen diesem zugeordneten Hall-Sensor statt um die vorgesehene Drehachse um eine davon abweichende Achse dreht, oder statt der allein vorgesehenen Drehbewegung um die vorgesehene Drehachse eine zusätzliche Relativbewegung gegenüber dieser ausführt.

Der Winkelsensor gemäß der vorliegenden Erfindung hat gegenüber dem vorbekannten Stand der Technik den Vorteil, ebenfalls das Spiel zwischen Antriebs- und Messzähnrädern deutlich zu verringern und so den dadurch verursachten Hysteresefehler merklich zu verkleinern, ohne jedoch den Nachteil hinnehmen zu müssen, dass die Drehachsen der Messzahnräder im Bezug auf die zugeordneten Sensorelemente nicht fixiert werden können.

Dies wird erfindungsgemäß dadurch erreicht, dass das Antriebszahnrad durch zumindest ein federelastisch wirkendes Element kraftbeaufschlagt in eine definierte radiale Position innerhalb seines Lagers gedrückt wird.

Durch diese erfindungsgemäße Ausgestaltung des Winkelsensors ist es möglich, die Drehachse des Antriebszahnrades bezüglich des Gehäuse des Winkelsensors unabhängig von seiner Drehstellung zu fixieren, so dass auch die Drehachsen der Messzahnräder in Relation zu dieser festgelegt werden können. Die durch das federelastisch wirkendes Element auf das Antriebszahnrad ausgeübte Kraft wird durch die gegenüberliegende Wand des Lagers aufgenommen, so dass dadurch keine Kraft auf die Messzahnräder ausgeübt wird, die zu Geräuschentwicklungen führen könnte.

In einer bevorzugten Ausführungsform des erfindungsgemäßen Winkelsensors ist das Lager für das Antriebszahnrad durch eine ringförmige Aufnahme des Sensorgehäuses gebildet und das zumindest eine federelastisch wirkende Element den Messzahnrädern radial gegenüberliegend in der ringförmigen Aufnahme des Sensorgehäuses aufgenommen.

Eine besonders einfache und kostengünstige Herstellung des erfindungsgemäßen Winkelsensors ermöglicht eine Ausführung, bei der zwei Federblechstreifen als federelastisch wirkende Elemente in jeweils zwei in der ringförmigen Aufnahme vorhandenen axialen Schlitzen gehalten sind und gegen die Außenseite eines an das Antriebszahnrad angeformten Trägerelements drücken.

Gemäß einer Weiterbildung der vorliegenden Erfindung ist es vorgesehen, statische und/oder dynamische Abweichungen der Drehachse der drehbaren Welle sowohl hinsichtlich ihrer radialen Lage im Bezug auf die Drehachse des Antriebszahnrades als auch hinsichtlich einer möglichen Abweichung von der Parallelität ihrer Ausrichtung durch ein zwischen der Welle und dem Antriebszahnrad aufgenommenes Übertragungselement zu kompensieren.

Durch ein Übertragungselement, das federelastische Eigenschaften aufweist und unter elastischer Vorspannung zwischen der Welle und dem Antriebszahnrad aufgenommen ist, ist in jeder Drehstellung der Welle ein spielfreier Kontakt des Antriebszahnrades mit der Welle bewirkt.

Weitere vorteilhafte Ausgestaltungen und Weiterbildungen sind in den abhängigen Ansprüchen angegeben. Ein Ausführungsbeispiel der Erfindung ist in der Zeichnung dargestellt und wird im folgenden anhand der Zeichnung näher erläutert.

Es zeigen
- **Fig. 1**: eine Ausführungsform des erfindungsgemäßen Winkelsensors als magnetischer Lenkwinkelsensor für ein Kraftfahrzeug
- **Fig. 2**: eine Aufsicht auf das Antriebszahnrad und die Messzahnräder des Winkelsensors aus Fig. 1, mit einem Durchbruch durch das Antriebszahnrad, und eine Detailvergrößerung

In der Zeichnung ist ein erfindungsgemäßer Winkelsensor in einer Ausführung als magnetischer Lenkwinkelsensor für ein Kraftfahrzeug dargestellt. Die drehbare Welle, deren Drehstellung durch den Winkelsensor erfasst wird, ist in diesem Falle die in der Zeichnung nicht dargestellte Lenkspindel des Kraftfahrzeugs.

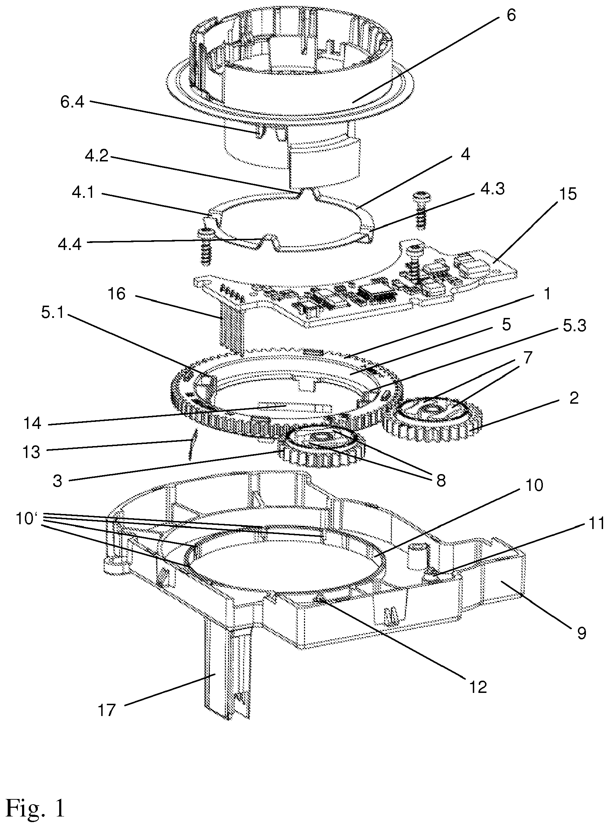

Wie in Fig. 1 zu sehen ist in einem Sensorgehäuse 9 des Winkelsensors ein außenseitig an einem Trägerelement 5 angeformtes Antriebszahnrad 1 drehbar gelagert. Dazu ist das Trägerelement 5 mit einem sich unterhalb des Zahnrades weiter erstreckenden, kurzen Schaft in einer zu diesem übermassigen, ringförmigen Aufnahme 10 des Sensorgehäuses 9 gehalten. In kämmenden Eingriff mit diesem Antriebszahnrad 1 gestellt sind zwei, ebenfalls in dem Sensorgehäuse 9 auf zur Drehachse des Antriebszahnrades 1 parallel ausgerichteten Achsen 11, 12 drehbar gelagerte Messzahnräder 2, 3.

Den Achsen 11, 12 für die Messzahnräder 2, 3 radial gegenüberliegend sind in der ringförmigen Aufnahme 10 des Sensorgehäuses 9 federelastisch wirkende Elemente 13, 14 aufgenommen. Die federelastisch wirkenden Elemente 13, 14 sind in der dargestellten Ausführung des Winkelsensors durch Federblechstreifen gebildet, die in jeweils zwei in der ringförmigen Aufnahme 10 vorhandenen axialen Schlitzen 10' gehalten sind. Die Federblechstreifen 13, 14 drücken als federelastisch wirkende Elemente gegen die Außenseite des sich unterhalb des Antriebszahnrades 1 erstreckenden, kurzen Schafts des Trägerelements 5, so dass das an diesem angeformte Antriebszahnrad 1 kraftbeaufschlagt in die den Federblechstreifen 13, 14 gegenüberliegende, den Achsen 11, 12 für die Messzahnräder 2, 3 nahe liegende, radiale Position innerhalb seines durch die ringförmige Aufnahme 10 gebildeten Lagers gedrückt wird.

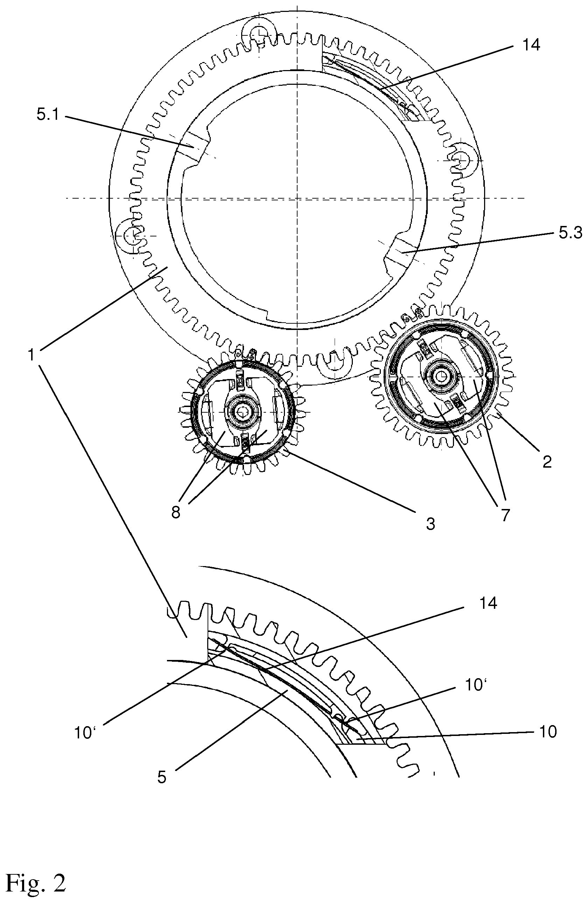

Die in Fig. 2 gezeigte Aufsicht auf das Antriebszahnrad 1 und die Messzahnräder 2, 3 des Winkelsensors, die mit einem in einer Detailvergrößerung noch genauer sichtbaren Durchbruch durch das Antriebszahnrad 1 dargestellt ist, verdeutlicht dies. Der hier sichtbare Federblechstreifen 14 ist in der Nähe seiner Enden in den Schlitzen 10' in der ringförmigen Aufnahme 10 des Sensorgehäuses 9 gehalten. Die Innenwand der ringförmigen Aufnahme 10 ist im Bereich zwischen diesen Haltepunkten etwas nach außen versetzt, so dass für den Federblechstreifen 14 ein gewisser Spielraum nach außen vorhanden ist. Mit seinem mittleren Bereich liegt der Federblechstreifen 14 an der Außenseite des kurzen Schaftes des an dem Antriebszahnrad 1 angeformten Trägerelements 5 an und drückt dieses in Richtung der Drehachse. Die gemeinsame Wirkung dieses Federblechstreifens 14 mit der des in dieser Darstellung verdeckten zweiten Federblechstreifens 13, der in der gleichen Weise in der ringförmigen Aufnahme 10 des Sensorgehäuses gehalten ist und auf das Antriebszahnrad 1 eine Kraft ausübt, besteht darin, dass die Außenseite des kurzen Schaftes des an dem Antriebszahnrad 1 angeformten Trägerelements 5 an der etwa der Mitte zwischen den Federelementen 13, 14 radial gegenüberliegenden Seite der Innenwand der ringförmigen Aufnahme 10 des Sensorgehäuses 9, also in einem Bereich, der zwischen den Verbindungslinien von der Drehachse des Antriebszahnrades 1 zu den Achsen 11, 12 der Messzahnräder 2, 3 gelegen ist, kraftbeaufschlagt anliegt.

Die Messzahnräder 2, 3 sind kleiner als das Antriebszahnrad 1 und weisen unterschiedliche Zähnezahlen auf, so dass aus den jeweiligen Winkelstellungen der Messzahnräder 2, 3 in einer beispielsweise aus der deutschen Offenlegungsschrift DE 10 2006 006 359 A1 bekannten Weise aus einem Schwebungswinkel die Winkelstellung des Antriebszahnrades 1 und somit der Welle auch über mehrere Umdrehungen eindeutig ermittelbar ist. Die zur Ermittlung der Drehstellung der Welle erforderliche Erfassung der Winkelstellung der Messzahnräder 2, 3 erfolgt in diesem Falle mittels auf einer Leiterplatte 15 angeordneter Magnetfeldsensoren, die jeweils die Ausrichtung der durch in den Messzahnrädern 2, 3 angeordnete Permanentmagneten 7, 8 hervorgerufenen Magnetfelder detektieren. Auf der Leiterplatte 15 befinden sich neben den Magnetfeldsensoren, bei denen es sich beispielsweise um Hall-Sensoren oder magnetoresistive Sensoren handelt, darüber hinaus weitere elektronische Bauelemente einer Mess- und Auswerteelektronik des Winkelsensors. Eine exakte Positionierung der Magnetfeldsensoren gegenüber den Messzahnrädern 2, 3 und damit auch den Permanentmagneten 7, 8 erfolgt durch zwei in der Zeichnung verdeckte Bohrungen in der Leiterplatte 15, in die Fortsätze der die Messzahnräder 2, 3 tragenden Achsen 11, 12 eingreifen sowie durch eine Verschraubung der Leiterplatte 15 mit dem Sensorgehäuse 9 in der so definierten Position. Zur Verbindung mit anderen Steuergeräten sind in der Leiterplatte 15 Kontaktstifte 16 eingepresst, die zur Ausbildung eines Steckverbinders innerhalb eines am Sensorgehäuse 9 angeformten Steckerkragens 17 aus dem Sensorgehäuse 9 herausgeführt sind.

Eine drehmomentübertragende Verbindung des Antriebszahnrades 1 mit der drehbaren Welle, also mit der Lenkspindel, erfolgt mittels eines Übertragungselements 4. Als Übertragungselement 4 ist hier ein federelastisch ausgebildeter, vorzugsweise aus einem Federblech hergestellter, im wesentlichen kreisringförmiger Körper eingesetzt, welcher mit vier, in axialer Richtung ausgestellten Lagerfortsätzen 4.1, 4.2, 4.3, 4.4 versehen ist. Dabei bilden jeweils zwei der Lagerfortsätze ein Paar und sind bezüglich des Kreisumfangs des Übertragungselements 4 einander gegenüberliegend angeordnet. Die Lagerfortsätze 4.1, 4.3 des ersten Paares weisen dabei nach unten und sind mit zugeordneten Lageraufnahmen 5.1, 5.3 des Antriebszahnrades 1 in Eingriff gestellt. Die Lagerfortsätze 4.2, 4.4 des zweiten Paares weisen nach oben und sind mit diesen zugeordneten Lageraufnahmen 6.2, 6.4 eines mit der drehbaren Welle starr verbundenen Lagerringes 6 in Eingriff gestellt. Die Lageraufnahmen 5.1, 5.3 des Antriebszahnrades 1 sind in der vorliegenden Ausführung einstückig an dem Trägerelement 5 angeformt, die wellenseitigen Lageraufnahmen 6.2, 6.4 des Lagerrings 6 sind einstückig mit diesem ausgebildet.

Im Idealfall sollten die Drehachsen der Welle und des Antriebszahnrades 1 identisch sein, d.h. auf einer Geraden im Raum liegen. Im realen Zusammenbau spielen jedoch nicht unerhebliche Toleranzen bereits was die Lage dieser Achsen zueinander in einer festen Drehstellung angeht, also statische Toleranzen eine Rolle. Insbesondere im Falle des hier dargestellten Lenkwinkelsensors, bei dem die drehbare Welle durch die Lenkspindel des Kraftfahrzeugs gebildet ist, sind auch dynamische Toleranzen zu berücksichtigen, da bei der Lenkspindel ein gewisses Maß an Bewegungsspiel nicht zu eliminieren ist.

Mittels des Übertragungselements 4 werden Abweichungen der Drehachse der Welle von der Drehachse des Antriebszahnrades 1 kompensiert, und zwar sowohl Abweichungen in der radialen Lage der Achsen als auch Abweichungen von der Parallelität. Das Übertragungselement 4 ist dazu zwischen dem Lagerring 6 und dem Antriebszahnrad 1 unter axialer Vorspannung aufgenommen. Die durch die Lageraufnahmen 5.1, 5.3 des Antriebszahnrades 1 auf das Übertragungselement 4 wirkende Kraft ist aufwärts gerichtet, die durch die Lageraufnahmen 6.2, 6.4 des Lagerring 6 auf das Übertragungselement 4 wirkende Kraft ist abwärts gerichtet. Die flachen Bereiche des ringförmigen Körpers des Übertragungselements 4 zwischen den Lagerfortsätzen 4.1, 4.2, 4.3, 4.4 werden dadurch einer Biegung unterworfen. Aufgrund der federelastischen Eigenschaften resultieren aus dieser Biegung Gegenkräfte mit denen die Lagerfortsätze 4.1, 4.2, 4.3, 4.4 gegen die Lageraufnahmen 5.1, 6.2, 5.3, 6.4 drücken, so dass stets eine spielfreie Kopplung zwischen den Lagerfortsätzen 4.1, 4.2, 4.3, 4.4 und den Lageraufnahmen 5.1, 6.2, 5.3, 6.4 und somit in der Konsequenz auch zwischen dem mit der Welle verbundenen Lagerring 6 und dem Antriebszahnrad 1 gegeben ist.

Der erfindungsgemäß ausgebildete Lenkwinkelsensor kann als Unterbaugruppe eines Lenksäulenmoduls für ein Kraftfahrzeug fungieren, welches als weitere Unterbaugruppen beispielsweise eine sogenannte Wickelfederkassette, in der ein Flachbandkabel zum Übertragen von Energie und/oder Signalen zwischen dem Lenkrad und der Lenksäule in Windungen innerhalb eines ringförmigen Hohlraumes eines seine Längsachse konzentrisch umgebenden Gehäuses aufgenommen ist, sowie Lenkstockschalter zur Betätigung etwa der Blinker- und/oder Wischerfunktionen des Kraftfahrzeugs umfasst.

## Patentansprüche

1. Winkelsensor zur Erfassung der Drehstellung einer drehbaren Welle mit einem drehmomentübertragend mit der Welle verbundenen Antriebszahnrad (1) und zumindest einem direkt durch dieses angetriebenen Messzahnrad (2, 3), wobei das Antriebszahnrad (1) und das zumindest eine Messzahnrad (2, 3) in einem Sensorgehäuse (9) gelagert sind, und wobei aus der Winkelstellung des/der Messzahnrades/-räder (2, 3) die Winkelstellung der Welle ermittelbar ist, **dadurch gekennzeichnet, dass** das Antriebszahnrad (1) durch zumindest ein federelastisch wirkendes Element (13, 14) kraftbeaufschlagt in eine definierte radiale Position innerhalb seines Lagers gedrückt wird.

2. Winkelsensor nach Anspruch 1, **dadurch gekennzeichnet, dass** das Lager für das Antriebszahnrad (1) durch eine ringförmige Aufnahme (10) des Sensorgehäuses (9) gebildet ist, und dass das zumindest eine federelastisch wirkende Element (13, 14) dem/den Messzahnrad/-rädern (2, 3) radial gegenüberliegend in der ringförmigen Aufnahme (10) des Sensorgehäuses (9) aufgenommen ist.

3. Winkelsensor nach Anspruch 2, **dadurch gekennzeichnet, dass** zwei Federblechstreifen (13, 14) als federelastisch wirkende Elemente in jeweils zwei in der ringförmigen Aufnahme (10) vorhandenen axialen Schlitzen (10') gehalten sind und gegen die Außenseite eines an das Antriebszahnrad (1) angeformten Trägerelements (5) drücken.

4. Winkelsensor nach einem der Ansprüche 1 bis 3, **dadurch gekennzeichnet, dass** das Antriebszahnrad (1) mittels eines Übertragungselements (4) mit der Welle verbunden ist, welches Übertragungselement (4) federelastische Eigenschaften aufweist und unter elastischer Vorspannung zwischen der Welle und dem Antriebszahnrad (1) aufgenommen ist und zum Ausgleich statischer und/oder dynamischer Abweichungen der Drehachse der Welle von der Drehachse des Antriebszahnrades (1) dient.

5. Winkelsensor nach Anspruch 4, **dadurch gekennzeichnet, dass** das Übertragungselement (4) ein mit vier Lagerfortsätzen (4.1, 4.2, 4.3, 4.4) versehener ringförmiger Körper ist, wobei jeweils zwei der Lagerfortsätze (4.1, 4.3; 4.2, 4.4) bezüglich des Ringumfangs einander gegenüberliegend angeordnet und mit jeweils zwei einerseits der Welle und andererseits dem Antriebszahnrad (1) zugeordneten Lageraufnahmen (5.1, 5.3; 6.2, 6.4) in Eingriff sind.

6. Winkelsensor nach einem der Ansprüche 1 bis 5, **dadurch gekennzeichnet, dass** das Messzahnrad (2, 3) mit einem Permanentmagneten (7, 8) versehen ist, dessen Winkelstellung durch einen zugeordneten Magnetfeldsensor erfasst wird.

7. Winkelsensor nach einem der Ansprüche 1 bis 6, **dadurch gekennzeichnet, dass** ein zweites durch das Antriebszahnrad (1) direkt oder indirekt angetriebenes Messzahnrad (3) vorhanden ist, und dass aus der Winkelstellung der beiden Messzahnräder (2, 3) die Winkelstellung der Welle über mehr als eine vollständige Umdrehung hinaus ermittelbar ist.

8. Winkelsensor nach einem der Ansprüche 1 bis 7, **dadurch gekennzeichnet, dass** der Winkelsensor einen Lenkwinkelsensor in einem Kraftfahrzeug ausbildet.

## Claims

1. Angle sensor for the purpose of recording the rotational position of a rotatable shaft which has a torque-transmitting driving toothed wheel (1) that is connected to the shaft and has at least one measuring cogwheel (2, 3) that is directly driven by the same, whereby the driving toothed wheel (1) and the at least one measuring cogwheel (2, 3) are supported in a sensor housing (9) and whereby the angular position of the shaft can be determined from the angular position of the measuring cogwheel(s) (2, 3), **characterised in that** the driving toothed wheel (1) is pressed by at least one resiliently acting element (13, 14) into a defined radial position within its bearing support in a force-actuated manner.

2. Angle sensor according to Claim 1, **characterised in that** the support for the driving toothed wheel (1) is formed by an annular receptacle (10) of the sensor housing (9) and that the at least one resiliently acting element (13, 14) is retained in the annular receptacle (10) of the sensor housing (9) radially opposite the measuring cogwheel(s) (2, 3).

3. Angle sensor according to Claim 2, **characterised in that** two strips of spring steel (13, 14) are each held as resiliently acting elements in two axial slots (10') provided in the annular receptacle (10) and press against the outer surface of a support element (5) integrally formed onto the driving toothed wheel (1).

4. Angle sensor according to any of Claims 1 to 3, **characterised in that** the driving toothed wheel (1) is connected to the shaft by means of a transmission member (4), the said transmission member (4) having resilient properties and being accommodated under elastic pretension between the shaft and the driving toothed wheel (1) and serving the purpose of compensating static and/or dynamic deviations in the rotational axis of the shaft from the rotational axis of the driving toothed wheel (1).

5. Angle sensor according to Claim 4, **characterised in that** the transmission member (4) is an annular body equipped with four bearing extensions (4.1, 4.2, 4.3, 4.4), whereby two of the bearing extensions (4.1, 4.3, 4.2, 4.4) are located opposite each other in respect of the circumference of the ring and engage in each case with two bearing receptacles (5.1, 5.3; 6.2, 6.4) allocated in each case to the shaft on the one hand and to the driving toothed wheel (1) on the other.

6. Angle sensor according to any of Claims 1 to 5, **characterised in that** the measuring cogwheel (2, 3) is equipped with a permanent magnet (7, 8) whose angular position is recorded by an associated magnetic field sensor.

7. Angle sensor according to any of Claims 1 to 6, **characterised in that** a second measuring cogwheel (3) driven directly or indirectly by the driving gear wheel (1) is provided, and that the angular position of the shaft can be determined from the angular position of the two measuring cogwheels (2, 3) over more than one complete rotation.

8. Angle sensor according to any of Claims 1 to 7, **characterised in that** the angle sensor constitutes a steering angle sensor in a motor vehicle.

## Revendications

1. Capteur d'angle pour le captage de la position de rotation d'un arbre rotatif, avec une roue dentée de commande (1), qui, transmettant le couple de rotation, est reliée à l'arbre, et avec au moins une roue dentée de mesure (2, 3), qui est directement entraînée par celle-ci, sachant que la roue dentée de commande (1) et l'au moins une roue dentée de mesure (2, 3) sont montées dans un boîtier de capteur (9), et sachant que la position angulaire de l'arbre peut être directement déterminée à partir de la position angulaire de la roue / des roues de mesure (2, 3), **caractérisé en ce que** la roue dentée de commande (1), étant soumise à la force d'au moins un élément élastique, qui fait ressort (13, 14), est pressée dans une position radiale, déterminée, à l'intérieur de son support.

2. Capteur d'angle selon la revendication 1, **caractérisé en ce que** le support associé à la roue dentée de commande (1) est formé par un réceptacle en forme d'anneau (10) du boîtier de capteur (9), et que l'au moins un élément élastique, qui fait ressort (13, 14) vient se loger dans le réceptacle en forme d'anneau (10) du boîtier de capteur (9), radialement par rapport à la roue dentée de mesure / aux roues dentées de mesure (2, 3).

3. Capteur d'angle selon la revendication 2, **caractérisé en ce que** deux bandes de tôles faisant ressort (13, 14) sont respectivement maintenues, en tant qu'éléments élastiques faisant ressort, dans deux fentes axiales (10'), prévues dans le réceptacle en forme d'anneau (10) et viennent s'appuyer contre la face extérieure d'un élément de support (5), qui est formé sur la roue dentée de commande (1).

4. Capteur d'angle selon l'une des revendications 1 à 3, **caractérisé en ce que** la roue dentée de commande (1) est raccordée à l'arbre, par le biais d'un élément de transmissions (4), lequel élément de transmission (4) présente des propriétés élastiques faisant ressort et est disposé, en étant sous contrainte élastique, entre l'arbre et la roue dentée de commande (1), et est destiné à la compensation de divergences statiques et / ou dynamiques de l'axe de rotation dudit arbre par rapport à l'axe de rotation de la roue dentée de commande (1).

5. Capteur d'angle selon la revendication 4, **caractérisé en ce que** l'élément de transmission (4) consiste en un corps en forme d'anneau, qui est pourvu de quatre saillies de support (4.1, 4.2, 4.3, 4.4), sachant que les deux saillies de support (4.1, 4.3; 4.2, 4.4) sont respectivement disposée à l'opposé l'une de l'autre, en ce qui concerne la circonférence, et qu'elles entre chacune en prise avec deux réceptacles de support (5.1, 5.3; 6.2, 6.4), qui sont, d'une part, associés à l'arbre et, d'autre part, associés à la roue dentée de commande (1).

6. Capteur d'angle selon l'une des revendications 1 à 5, **caractérisé en ce que** la roue dentée de mesure (2, 3) est pourvue d'un aimant permanent (7, 8), dont la position angulaire est détectée par un capteur de champ magnétique associé.

7. Capteur d'angle selon l'une des revendications 1 à 6, **caractérisé en ce qu'**est prévue une deuxième roue dentée de mesure (3), qui est entraînée directement ou indirectement par la roue dentée de commande (1), et que la position angulaire de l'arbre peut être déterminée au-delà d'une rotation complète, à partir de la position angulaire des deux roues dentées de mesure (2, 3).

8. Capteur d'angle selon l'une des revendications 1 à 7 **caractérisé en ce que** le capteur d'angle forme un capteur d'angle de braquage dans un véhicule automobile.
